# FASCICULE DE BREVET EUROPEEN

(11) **EP 0 475 841 B1**
(45) Date de publication et mention de la délivrance du brevet: **05.04.1995**
(21) Numéro de dépôt: 91402418.7
(22) Date de dépôt: 11.09.1991
(51) Int. Cl.: H01R 39/64

(54) **Palier à roulement à contacts électriques tournants**
Wälzlager mit drehenden elektrischen Kontakten
Rolling bearing with rotating electrical contacts

(30) Priorité: 13.09.1990 FR 9011318
(43) Date de publication de la demande: 18.03.1992
(73) Titulaire: SKF FRANCE, F-92142 Clamart Cédex (FR)
(72) Inventeur: Daviet, Bernard, F-78870 Bailly (FR); Lamy, Claude, F-78350 Les Loges en Josas (FR); Descombes, Michel, F-78000 Versailles (FR)
(74) Mandataire: Casalonga, Axel

(56) Documents cités:
- DE-A- 2 228 078
- FR-A- 2 124 728
- US-A- 3 564 477
- US-A- 4 336 974

## Description

La présente invention est relative à un palier à roulement comportant des contacts électriques tournants destinés à faire passer le courant électrique entre deux organes mécaniques dont l'un est mobile en rotation par rapport à l'autre.

D'une manière générale, lorsque l'on souhaite faire passer un courant électrique entre un organe mécanique fixe et un organe mécanique en rotation, on utilise des charbons ou balais en carbone solidaires d'un premier organe venant porter sur une bague collectrice généralement en cuivre ou en alliage de cuivre, solidaire du second organe en rotation par rapport au premier. Lorsque l'organe rotatif est supporté par un palier à roulement, les contacts électriques tournants sont généralement des ensembles séparés et isolés électriquement des paliers à roulement. C'est ainsi par exemple que dans le cas d'un alternateur, l'arbre du rotor est monté sur des paliers à roulement disposés à proximité de chaque extrémité de l'arbre. Entre ces deux roulements et à proximité de l'une des extrémités de l'arbre sont disposées deux bagues collectrices en cuivre solidaires du rotor. Un ou plusieurs charbons sont disposés radialement en contact de chaque bague collectrice sur lesquelles ils viennent frotter.

Une telle disposition présente plusieurs inconvénients du fait de l'utilisation d'éléments séparés pour assurer d'une part la fonction de support par palier à roulement et d'autre part la fonction de transmission du courant électrique. Il en résulte en effet une multiplicité de pièces à assembler ainsi qu'une dispersion de ces pièces dans la machine à assembler. De plus il en résulte un encombrement axial important.

On connaît par le brevet U.S. 3 216 262 (SCHWARTZ) un ensemble de palier à roulement muni de contacts électriques tournants rapportés axialement dans le prolongement du palier. Là encore il s'agit d'un dispositif complexe et particulièrement encombrant, notamment en direction axiale.

Dans certaines industries comme l'aéronautique ou l'automobile, il est par ailleurs de plus en plus nécessaire de véhiculer des courants électriques ou des informations sous forme de signaux électriques entre des éléments fixes et des éléments tournants afin par exemple de procéder à des mesures de pression, de vitesse, de température ou d'autres caractéristiques de fonctionnement. L'espace disponible pour les moyens de transmission de ces signaux électriques est de plus en plus restreint.

On connaît selon le certificat d'utilité français 2 124 728 (RIV-SKF) un palier à roulement dans lequel la transmission du courant électrique se fait directement par l'intermédiaire des chemins de roulement et des éléments roulants. Un tel dispositif ne peut cependant être utilisé que dans certaines applications pour lesquelles le passage du courant ne se fait que pendant une durée courte et et/ou le courant est de faible intensité. Il se produit en effet à proximité des points de contact des micro arcs électriques susceptibles d'endommager à la longue les chemins de roulement et les éléments roulants.

De plus, on connaît par le brevet US-A-3564477 un ensemble de palier à roulement muni de contacts électriques glissants rapportés directement sur le palier.

La présente invention a pour objet d'éliminer les inconvénients de l'art antérieur et de proposer un palier à roulement comportant des moyens de transmission du courant électrique même d'intensité importante, se présentant sous la forme d'un ensemble compact ne comportant que peu de pièces à manipuler et pouvant être utilisé dans un espace très réduit.

La présente invention a également pour objet l'intégration dans un palier à roulement de moyens de contact électrique tournants sous la forme d'un seul ensemble assurant simultanément la fonction de palier à roulement et la fonction de contact électrique tournant.

Le palier à roulement à contacts électriques tournants selon l'invention comprend des bagues intérieure et extérieure entre lesquelles sont disposés des éléments roulants, ledit palier étant muni de moyens permettant le passage d'un courant électrique entre deux organes dont l'un est mobile en rotation par rapport à l'autre. Selon l'invention, au moins une cartouche conductrice de forme générale annulaire est montée entre les bagues du roulement, dans un plan radial, par exemple dans un plan radial frontal du palier, ladite cartouche comprenant deux armatures conductrices pouvant tourner l'une par rapport à l'autre. Chaque armature est solidaire d'une des bagues de roulement et au moins un élément conducteur est pressé contre l'une des armatures par au moins un élément élastique conducteur en contact avec l'autre armature.

L'élément conducteur peut être constitué par une bague ou par des segments en carbone et peut être pressé axialement ou radialement contre l'armature avec laquelle il entre en contact.

L'élément élastique conducteur est de préférence fixé à l'armature avec laquelle il se trouve en contact. Il peut être constitué par une rondelle ondulée ou une bague munie de dents élastiques de support pour l'élément conducteur.

Les armatures de la cartouche qui sont réalisées en un matériau conducteur tel que par exemple de l'acier inoxydable, comportent des moyens de connexion avec des fils conducteurs d'arrivée et de sortie du courant. Ces moyens de connexion peuvent être constitués avantageusement par au moins une languette solidaire de chaque armature et obtenue par découpe.

Les armatures peuvent avantageusement servir également de support et de portée à une bague d'étanchéité à frottement, isolant le roulement du milieu extérieur.

Dans un mode de réalisation de l'invention, les bagues du palier et les éléments roulants sont réalisés en un matériau électriquement conducteur. Des moyens d'isolation électrique sont interposés entre les armatures et les bagues du palier, l'arrivée et la sortie du courant électrique se faisant par les languettes dont sont munies les armatures de la cartouche conductrice. L'isolation électrique peut être obtenue en prévoyant une couche d'une matière isolante sur les surfaces des armatures ou des bagues du palier en contact respectif.

Dans un autre mode de réalisation, les bagues du palier et/ou les éléments roulants sont réalisés de façon à ne pas conduire l'électricité A cet effet on peut utiliser un matériau isolant tel que la céramique ou prévoir seulement un dépôt isolant superficiel en céramique, caoutchouc etc. sur les surfaces des pièces en contact. La cartouche conductrice est alors en contact direct avec les deux bagues du palier.

Lorsque les éléments roulants sont réalisés de façon à ne pas conduire l'électricité tandis que les bagues du palier sont quant à elles conductrices de l'électricité, on prévoit avantageusement une couche de matière isolante sur la surface extérieure de la bague extérieure du palier et dans l'alésage de la bague intérieure. La cartouche conductrice peut être mise en contact direct avec les deux bagues du palier l'arrivée et la sortie du courant se faisant alors par les languettes des armatures de la cartouche conductrice.

En variante, lorsque les éléments roulants ne sont pas conducteurs, l'arrivée et la sortie du courant électrique peut se faire directement par les bagues du palier.

L'invention sera mieux comprise à l'étude d'une description détaillée de quelques modes de réalisation pris à titre d'exemples nullement limitatifs et illustrés par les dessins annexés sur lesquels :
la figure 1 est une vue en coupe d'un palier à roulement à contacts électriques tournants selon la présente invention;
la figure 2 est une vue extérieure de droite de la figure 1;
la figure 3 est une vue agrandie partielle en coupe de la cartouche conductrice équipant le palier à roulement de la figure 1;
la figure 4 est une coupe selon IV-IV de la figure 3, développée;
la figure 5 est une vue agrandie partielle en coupe analogue à la figure 4 d'une variante de réalisation et
la figure 6 est une vue en coupe selon VI-VI de la figure 5, développée.

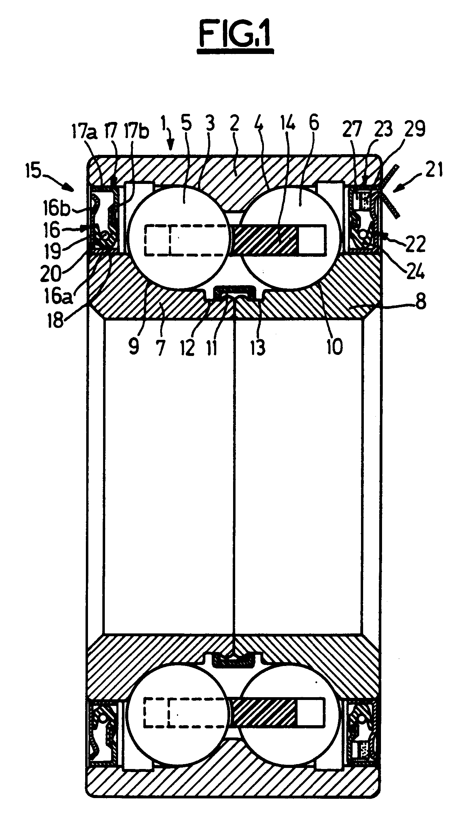

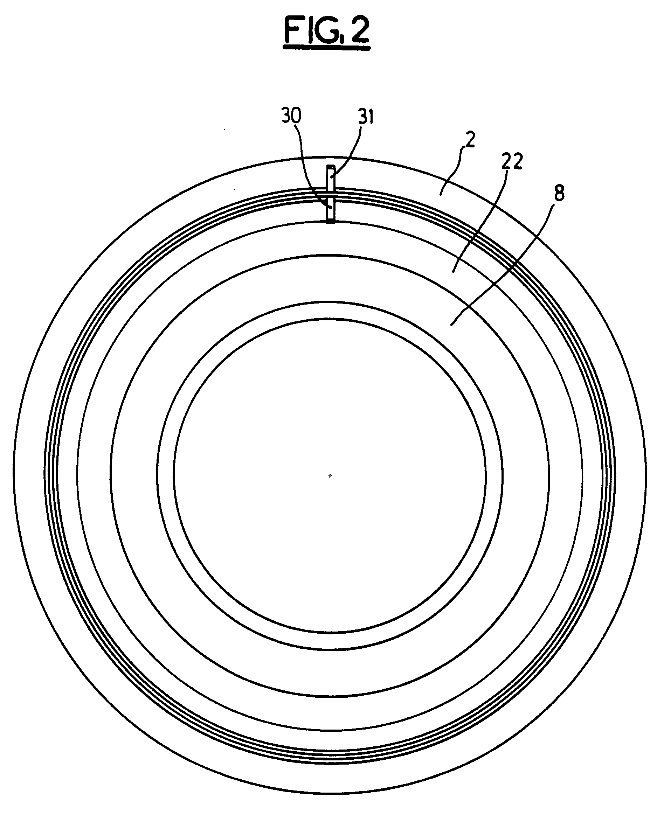

Tel qu'il est illustré sur les figures 1 à 4, le palier à roulement de l'invention, référencé 1 dans son ensemble, est un palier à double rangée de billes à contact oblique de structure classique. Le palier à roulement 1 comporte une bague extérieure 2 présentant deux chemins de roulement 3, 4 pour les deux rangées de billes 5, 6. Le palier à roulement 1 comporte également deux demi-bagues intérieures 7, 8 comportant chacune un chemin de roulement 9, 10 pour les billes 5,6. Les deux demi-bagues intérieures 7, 8 sont maintenues solidaires par un clip annulaire 11 qui coopère avec des gorges 12, 13 pratiquées à la périphérie extérieure des demi-bagues 7, 8. Les billes 5, 6 sont régulièrement réparties circonférentiellement grâce à une cage 14 en matière synthétique.

Du côté gauche de la figure 1, l'étanchéité du palier 1 est assurée par un joint d'étanchéité 15 de typo claqssique. Le joint d'étanchéité 15 en forme de cartouche est monté dans un plan radial frontal du palier 1 entre un alésage de la bague extérieure 2 et la périphérie extérieure de la demi-bague intérieure 7. Le joint d'étanchéité 15 comprend une collerette annulaire 16 du côté opposé aux billes 5 munie d'une partie cylindrique 16a et d'une partie radiale 16b, et une collerette annulaire 17 du côté des billes 5 munie également d'une partie cylindrique 17a et d'une partie radiale 17b. Sur la partie radiale 17b est montée une bague d'étanchéité en matière synthétique ou en caoutchouc souple 18 présentant une lèvre d'étanchéité 19 qui vient en contact avec la face intérieure de la partie radiale 16b, l'âme de la bague d'étanchéité 18 étant maintenue en contact de frottement avec la partie cylindrique 16a grâce à l'existence d'un ressort hélicoïdal annulaire 20.

L'ensemble de cette structure de joint d'étanchéité 15 est classique. Elle empêche la pénétration de souillures et de projections à l'intérieur du palier 1 depuis le côté gauche de la figure 1 entre la bague extérieure 2 et la demi-bague intérieure 7. Cette structure empêche également la sortie de la graisse contenue dans le roulement.

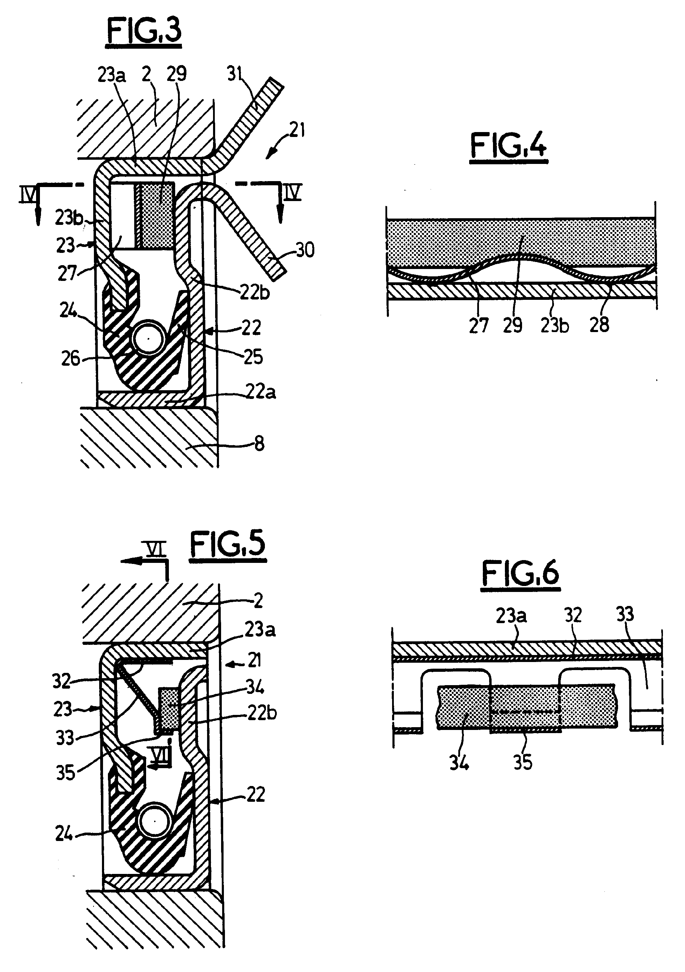

Du côté droit par rapport à la figure 1, se trouve montée entre la bague extérieure 2 et la demi-bague intérieure 8, sensiblement dans un plan radial frontal du palier 1, une cartouche conductrice référencée 21 dans son ensemble et qui présente globalement une structure analogue à celle du joint d'étanchéité 15. La cartouche conductric 21 se présente donc sous une forme annulaire . La cartouche conductrice 21 qui est visible en particulier sur la figure 3, présente une armature 22 qui sera qualifiée d'"intérieure" dans la présente description car elle est montée sur la demi-bague intérieure 8 et une armature 23 qui sera qualifiée d'"extérieure" car elle est montée sur la bague extérieure 2 du palier 1.

L'armature intérieure 22 est munie d'une portion cylindrique 22a qui est en contact avec la surface cylindrique extérieure de la demi-bague intérieure 8 et une portion radiale 22b qui présente donc la forme d'une collerette orthogonale à la portion cylindrique 22a. La collerette radiale 22b s'étend depuis la demi-bague intérieure 8 jusqu'à proximité de l'alésage de la bague extérieure 2 en laissant subsister un jeu entre elle et l'armature extérieure 23. L'armature extérieure 23 possède également une portion cylindrique 23a en contact cette fois avec l'alésage de la bague extérieure 2 et une collerette radiale 23b qui s'étend depuis l'alésage de la bague extérieure 2 jusqu'à une position sensiblement médiane entre la bague extérieure 2 et la demi-bague extérieure 8. L'alésage de la collerette radiale 23b porte une bague d'étanchéité 24 annulaire surmoulée sur l'armature 23, réalisée par exemple en matière synthétique en caoutchouc ou en un matériau analogue.La bague d'étanchéité 24 présente une lèvre d'étanchéité souple 25 dirigée vers l'extérieur, maintenue en contact de frottement sur la face de la collerette radiale 22b située du côté des billes 6. La bague d'étanchéité 24 est en outre en contact de frottement par son âme contre la portion cylindrique 22a sous l'action d'un ressort hélicoïdal annulaire 26.

On comprend dans ces conditions que la cartouche conductrice 21 constitue un joint d'étanchéité de structure analogue au joint d'étanchéité 15. La cartouche conductrice 21 du palier à roulement selon l'invention constitue cependant également un moyen de transmission de courant électrique.

A cet effet, une rondelle ondulée 27 visible en développement sur la figure 4 est maintenue en contact avec la face de la collerette radiale 23b qui est dirigée vers l'extérieur du palier à roulement 1. L'un des sommets des ondulations de la collerette 27 est fixé à la collerette radiale 23b par un point de soudure 28 de façon à immobiliser en rotation la rondelle 27 par rapport à l'armature extérieure 23. Une bague conductrice 29 par exemple réalisée en carbone est pressée axialement par la collerette ondulée 27 élastiquement contre la face de la collerette radiale 22b dirigée vers les billes 6. L'armature 22 présente, à un endroit de sa périphérie, une languette 30 repliée vers l'intérieur. L'armature 23 comporte également à un endroit de sa périphérie, une languette 31 repliée quant à elle vers l'extérieur. Les deux languettes 30, 31 peuvent être réalisées par découpe et permettent la soudure ou le sertissage de fils conducteurs pour l'arrivée et la sortie du courant électrique.

Comme on peut le voir sur la figure 3, un jeu subsiste entre la périphérie extérieure de la collerette radiale 22b et la portion cylindrique 23a de l'armature 23. Dans ces conditions lorsque le palier à roulement 1 est monté entre deux organes mécaniques en rotation relative, les deux demi-bagues intérieures 7, 8 étant par exemple entraînées en rotation tandis que la bague extérieure 2 est fixe, l'armature intérieure 22 se trouve également entraînée en rotation par la demi-bague intérieure 8 tandis que l'armature extérieure 23 reste immobilisée avec la bague extérieure 2.

L'isolation électrique des contacts électriques tournants et du palier à roulement par rapport aux organes mécaniques en rotation peut être réalisée de différentes manières.

Dans un premier mode de réalisation, les billes 5, 6 au même titre que la bague extérieure 2 et les demi-bagues intérieures 7, 8 sont réalisées en un matériau conducteur de l'électricité, par exemple en acier. La cartouche conductrice 21 doit alors être isolée électriquement par rapport à la bague extérieure 2 et la demi-bague intérieure 8. Cela peut être réalisé en prévoyant un revêtement non illustré sur les figures, d'une matière isolante telle qu'une couche de céramique, de caoutchouc ou analogue sur les surfaces en contact. On pourrait ainsi prévoir un tel revêtement isolant dans la portion de l'alésage de la bague extérieure 2 et dans la portion de surface cylindrique de la demi-bague intérieure 8 qui se trouvent en contact respectif avec les portions cylindriques 23a et 22a des armatures 23 et 22 de la cartouche conductrice 21. En variante ce revêtement isolant peut être prévu au contraire sur les surfaces des portions cylindriques 23a et 22a en contact respectif avec la bague extérieure 2 et la demi-bague intérieure 8. L'arrivée et la sortie du courant électrique dans la cartouche 21 se fait par les languettes de connexion 30 et 31.

Dans un autre mode de réalisation, le palier à roulement 1 peut comporter certains éléments non conducteurs de l'électricité. C'est ainsi que les bagues 2, 7 et 8 et/ou les billes 5, 6 peuvent être réalisées en céramique ou revêtues de céramique dans certaines applications, par exemple des applications nécessitant une haute résistance à la température. Quelle que soit l'application, il peut être également avantageux d'utiliser des billes 5, 6 en céramique ou revêtues de céramique en combinaison avec des bagues 2, 7, 8 de type classique réalisées en un matériau conducteur de l'électricité et en particulier en acier afin de faciliter l'isolation électrique entre les bagues du palier à roulement.

Dans ce cas, il n'est plus nécessaire d'isoler la cartouche conductrice 21 par rapport aux bagues 2 et 8 du roulement. Il suffit de prévoir une couche de matière isolante sur la surface cylindrique extérieure de la bague extérieure 2 dans l'alésage des demi-bagues intérieures 7, 8 et éventuellement sur les faces desdites bagues. Lorsque le palier à roulement 1 est monté entre deux organes mécaniques en rotation relative,le revêtement de matière isolante assure l'isolation électrique du palier à roulement 1. Etant donné que les billes 5, 6 ne conduisent pas l'électricité, la cartouche conductrice 21 peut être placée en contact direct avec la bague extérieure 2 et la demi-bague intérieure 8 sans interposition d'aucune couche isolante. L'arrivée et la sortie du courant électrique se fait par les languettes 30, 31.

Dans une variante de ce mode de réalisation avec éléments roulants non conducteurs, l'arrivée et la sortie du courant électrique se font directement par la bague extérieure 2 et la demi-bague intérieure 8, lesdites bagues pouvant être ou non, suivant les applications, isolées par rapport aux organes environnants en contact avec elles. Dans ce cas les languettes 30, 31 peuvent être supprimées.

Le mode de réalisation illustré sur les figures 5 et 6 se différencie du mode de réalisation illustré sur les figures 3 et 4 par la structure de l'élément conducteur de l'électricité. A part cette différence, la cartouche conductrice 21 présente la même structure et les pièces identiques portent les mêmes références sur les figures 5 et 6. Dans ce mode de réalisation, l'élément élastique conducteur n'est plus constitué par la rondelle ondulée 27 mais par une bague 32 insérée dans l'alésage de la partie cylindrique 23a de l'armature 23 et qui présente une pluralité de dents élastiques 33 dirigées vers l'intérieur et servant de support à une bague conductrice 34 par exemple en carbone, maintenue en contact contre la face de la collerette radiale 22b située du côté des billes 6. Pour assurer un tel contact élastique, les dents 33 sont radialement inclinées en s'écartant des billes 6 de façon à exercer une poussées axiale sur la bague 34. L'extrémité des pattes élastiques 33 comporte un rebord 35 qui maintient vers l'intérieur la bague conductrice 34.

Dans la variante illustrée sur la figure , la cartouche conductrice 21 ne comporte pas les languettes 30 et 31 visibles sur la figure 3 l'arrivée et la sortie du courant se faisant directement par la bague extérieure 2 et la demi-bague intérieure 8. L'isolation électrique du contact tournant est assurée comme il a été indiqué précédemment pour le mode de réalisation illustré sur les figures 1 à 4.

Bien que la description ait été faite à partir d'un exemple portant sur un roulement à billes à double rangées de billes à contact oblique on comprendra que l'invention puisse être appliquée à tous types de roulement tels que des roulements à billes à une seule rangée de billes, des roulements à rouleaux, des butées, etc. De plus, bien que dans l'exemple illustré on n'ait prévu une cartouche conductrice que d'un seul côté du palier à roulement en laissant subsister de l'autre côté une bague d'étanchéité classique, on comprendra que l'on puisse prévoir une cartouche conductrice de chaque côté du palier.

L'élément conducteur qui a été décrit dans les exemples illustrés sous la forme d'une bague annulaire pressée axialement sur l'une des armatures de la cartouche conductrice pourrait être remplacé par une pluralité de segments conducteurs. L'effort de contact pourrait par ailleurs s'exercer radialement en conformant l'armature de façon appropriée, au lieu de s'exercer axialement.

Enfin ou notera que la cartouche conductrice pourrait être montée entre les bagues du palier dans un plan radial distinct du plan radial frontal dans lequel elle se trouve montée sur les dessins annexés.

## Revendications

1. Palier à roulement à contacts électriques tournants comprenant des bagues intérieure (7,8) et extérieure (2) entre lesquelles sont disposés des éléments roulants (5, 6) et au moins une cartouche conductrice (21) de forme générale annulaire étant montée entre les bagues du roulement dans un plan radial du palier, de façon à permettre le passage d'un courant électrique entre deux organes dont l'un est mobile en rotation par rapport à l'autre *caractérisé* par le fait que ladite cartouche comprend deux armatures conductrices (22, 23) pouvant tourner l'une par rapport à l'autre, chaque armature étant solidaire d'une des bagues du roulement et au moins un élément conducteur (29, 34) étant pressé contre l'une des armatures (22) par au moins un élément élastique conducteur (27, 33) en contact avec l'autre armature (23).

2. Palier à roulement selon la revendication 1, caractérisé par le fait que l'élément conducteur est constitué par une bague ou des segments en carbone.

3. Palier à roulement selon la revendication 1 ou 2, *caractérisé* par le fait que l'élément élastique conducteur est fixé à l'armature avec laquelle il se trouve en contact.

4. Palier à roulement selon l'une quelconque des revendications précédentes, *caractérisé* par le fait que l'élément élastique est constitué d'une rondelle ondulée (27).

5. Palier à roulement selon l'une quelconque des revendications 1 à 3, *caractérisé* par le fait que l'élément élastique est constitué d'une bague (32) munie de dents élastiques (33) de support pour l'élément conducteur (34).

6. Palier à roulement selon l'une quelconque des revendications précédentes, *caractérisé* par le fait que les armatures servent également de support et de portée à une bague d'étanchéité (24) à frottement, isolant le roulement du milieu extérieur.

7. Palier à roulement selon l'une quelconque des revendications précédentes, caractérisé par le fait que les armatures comportent chacune au moins un moyen de connexion pour l'arrivée ou la sortie du courant électrique.

8. Palier à roulement selon l'une quelconque des revendications précédentes, *caractérisé* par le fait que les armatures comportent chacune au moins une languette (30, 31) obtenue par découpe et permettant la connexion avec des fils conducteurs.

9. Palier à roulement selon la revendication 7, *caractérisé* par le fait que les bagues du palier et les éléments roulants sont réalisés en un matériau électriquement conducteur, des moyens d'isolation électrique étant interposés entre les armatures (22, 23) de la cartouche conductrice (21) et les bagues (2, 8) du palier, l'arrivée et la sortie du courant électrique se faisant par les languettes précitées (30, 31).

10. Palier à roulement selon la revendication 7, *caractérisé* par le fait qu'une couche d'une matière isolante est prévue sur les surfaces des armatures ou des bagues du palier en contact respectif.

11. Palier à roulement selon l'une quelconque des revendications 1 à 8, *caractérisé* par le fait que les bagues et/ou les éléments roulants sont réalisés de façon à ne pas conduire l'électricité, la cartouche conductrice (21) étant en contact direct avec les bagues du palier.

12. Palier à roulement selon l'une quelconque des revendications 1 à 8, *caractérisé* par le fait que les éléments roulants sont réalisés de façon à ne pas conduire l'électricité, les bagues étant quant à elles conductrices de l'électricité et une couche de matière isolante étant prévue sur la surface extérieure de la bague extérieure (2) et dans l'alésage de la bague intérieure (8), la cartouche conductrice (21) étant en contact direct avec les deux bagues précitées, l'arrivée et la sortie du courant électrique se faisant par les languettes précitées (30, 31).

13. Palier à roulement selon l'une quelconque des revendications 1 à 8, *caractérisé* par le fait que les éléments roulants sont réalisés de façon à ne pas conduire l'électricité, les bagues du palier étant quant à elles conductrices de l'électricité et la cartouche conductrice (21) étant en contact direct avec les deux bagues du palier, l'arrivée et la sortie du courant électrique se faisant par les bagues du palier.

## Patentansprüche

1. Wälzlager mit drehbaren elektrischen Kontakten, das einen Innenring (7, 8) und einen Außenring (2), zwischen denen Wälzkörper (5, 6) angeordnet sind, und wenigstens einen leitenden, im wesentlichen ringförmigen Einsatz (21) aufweist, der zwischen den Ringen in einer radialen Ebene des Wälzlagers derart angebracht ist, daß er die Übertragung von elektrischem Strom zwischen zwei Teilen ermöglicht, von denen das eine gegenüber dem anderen drehbeweglich ist, dadurch gekennzeichnet, daß der Einsatz zwei leitende Einsatzstücke (22, 23) aufweist, die gegeneinander verdrehbar sind, wobei jedes Einsatzstück an einem der Lagerringe befestigt ist und wenigstens ein Leiterelement (29, 34) gegen das eine der Einsatzstücke (22) mittels wenigstens einem mit dem anderen Einsatzstück (23) in Berührung stehenden elastischen Leiterelement (27, 33) gedrückt ist.

2. Wälzlager nach Anspruch 1, dadurch gekennzeichnet, daß das Leiterelement von einem Ring oder von Segmenten aus Kohlenstoff gebildet ist.

3. Wälzlager nach Anspruch 1 oder 2, dadurch gekennzeichnet, daß das elastische Leiterelement auf dem Einsatzstück befestigt ist, mit dem es in Berührung steht.

4. Wälzlager nach einem der vorstehenden Ansprüche, dadurch gekennzeichnet, daß das elastische Element aus einem gewellten Ring (27) besteht.

5. Wälzlager nach einem der Ansprüche 1 bis 3, dadurch gekennzeichnet, daß das elastische Element aus einem Ring (32) besteht, der mit elastischen Haltezinken (33) für das Leiterelement (34) versehen ist.

6. Wälzlager nach einem der vorstehenden Ansprüche, dadurch gekennzeichnet, daß die Einsatzstücke auch dazu dienen, einen gleitenden Dichtring (24) zu tragen und zu haltern, der das Lager gegenüber der Außenumgebung abdichtet.

7. Wälzlager nach einem der vorstehenden Ansprüche, dadurch gekennzeichnet, daß jedes der Einsatzstücke wenigstens ein Anschlußmittel zum Einspeisen oder Abnehmen des elektrischen Stromes aufweist.

8. Wälzlager nach einem der vorstehenden Ansprüche, dadurch gekennzeichnet, daß jedes der Einsatzstücke wenigstens eine ausgeschnittene Lasche (30, 31) aufweist, die den Anschluß von Leitungsdrähten gestatten.

9. Wälzlager nach Anspruch 7, dadurch gekennzeichnet, daß die Lagerringe und die Wälzkörper aus einem elektrisch leitenden Material hergestellt sind, daß elektrische Isolationsmittel zwischen den Einsatzstücken (22, 23) des leitenden Einsatzes (21) und den Lagerringen (2, 8) angeordnet sind und daß das Einspeisen und Abnehmen des elektrischen Stromes über die vorgenannten Laschen (30, 31) erfolgt.

10. Wälzlager nach Anspruch 7, dadurch gekennzeichnet, daß eine Schicht aus isolierendem Material auf den Oberflächen der Einsatzstücke oder der Lagerringe vorgesehen ist, soweit sie jeweils einander berühren.

11. Wälzlager nach einem der vorstehenden Ansprüche 1 bis 8, dadurch gekennzeichnet, daß die Ringe und/oder die Wälzkörper so ausgeführt sind, daß sie keinen Strom leiten und daß der leitende Einsatz (21) mit den Lagerringen unmittelbar in Berührung steht.

12. Wälzlager nach einem der Ansprüche 1 bis 8, dadurch gekennzeichnet, daß die Wälzkörper so ausgeführt sind, daß sie keinen Strom leiten, daß die Ringe ihrerseits elektrische Leiter sind, daß jeweils eine Schicht aus isolierendem Material auf der Außenfläche des Außenrings (2) und eine in der Öffnung des Innenrings (8) vorgesehen ist und daß der leitende Einsatz (21) mit den beiden vorgenannten Ringen unmittelbar in Berührung steht, wobei die Einspeisung und die Abnahme des elektrischen Stromes über die vorgenannten Laschen (30, 31) erfolgt.

13. Wälzlager nach einem der Ansprüche 1 bis 8, dadurch gekennzeichnet, daß die Wälzkörper so ausgeführt sind, daß sie elektrisch isolierend sind, daß die Lagerringe ihrerseits elektrisch leitend sind und daß der leitende Einsatz (21) mit den Lagerringen unmittelbar in Berührung steht, wobei die Einspeisung und die Abnahme des elektrischen Stromes über die Lagerringe erfolgt.

## Claims

1. Rolling bearing with rotating electrical contacts comprising inner (7, 8) and outer (2) races between which are disposed rolling elements (5, 6) and at least one conductive cartridge (21) of generally annular form being mounted between the races of the bearing mechanism in a radial plane of the bearing, in such a manner as to permit the passage of an electrical current between two components, one of which is rotationally moveable in relation to the other, characterised in that the said cartridge comprises two conductive armatures (22, 23), one being able to rotate in relation to the other, each armature being integral with one of the races of the bearing mechanism and at least one conductive element (29, 34) being pressed against one of the armatures (22) by at least one conductive elastic element (27, 33) in contact with the other armature (23).

2. Rolling bearing according to Claim 1, characterised in that the conductive element is constituted by a ring or segments made of carbon.

3. Rolling bearing according to either of Claims 1 and 2, characterised in that the conductive elastic element is fixed to the armature with which it is in contact.

4. Rolling bearing according to any one of the preceding claims, characterised in that the elastic element is constituted by a crinkle washer (27).

5. Rolling bearing according to any one of Claims 1 to 3, characterised in that the elastic element is constituted by a ring (32) equipped with elastic support teeth (33) for the conductive element (34).

6. Rolling bearing according to any one of the preceding claims, characterised in that the armatures also serve as a support and a seating for a frictional sealing ring (24), insulating the rolling mechanism from the external medium.

7. Rolling bearing according to any one of the preceding claims, characterised in that the armatures each comprise at least one connection means for the input or the output of the electrical current.

8. Rolling bearing according to any one of the preceding claims, characterised in that the armatures each comprise at least one blade terminal (30, 31) obtained by a cutting out operation and permitting the connection with conductive leads.

9. Rolling bearing according to Claim 7, characterised in that the races of the bearing and the rolling elements are constructed from an electrically conductive material, electrical insulation means being interposed between the armatures (22, 23) of the conductive cartridge (21) and the races (2, 8) of the bearing, the input and the output of the electrical current being brought about by the abovementioned blade terminals (30, 31).

10. Rolling bearing according to Claim 7, characterised in that a layer of insulating material is provided on the surfaces of the armatures or of the races of the bearing which are in respective contact.

11. Rolling bearing according to any one of Claims 1 to 8, characterised in that the races and/or the rolling elements are constructed in such a manner as not to conduct electricity, the conductive cartridge (21) being in direct contact with the races of the bearing.

12. Rolling bearing according to any one of Claims 1 to 8, characterised in that the rolling elements are constructed in such a manner as not to conduct electricity, the races themselves being electrically conductive and a layer of insulating material being provided on the outer surface of the outer race (2) and in the bore of the inner race (8), the conductive cartridge (21) being in direct contact with the two aforementioned races, the input and the output of the electrical current being brought about by the abovementioned blade terminals (30, 31).

13. Rolling bearing according to any one of Claims 1 to 8, characterised in that the rolling elements are constructed in such a manner as not to conduct electricity, the races of the bearing themselves being electrically conductive and the conductive cartridge (21) being in direct contact with the two races of the bearing, the input and the ouput of the electrical current being brought about by the races of the bearing.
